# EUROPEAN PATENT SPECIFICATION

(11) **EP 0 833 870 B1**
(45) Date of publication and mention of the grant of the patent: **08.09.1999**
(21) Application number: 96918936.4
(22) Date of filing: 12.06.1996
(51) Int. Cl.: C09D 5/16, C09D 133/14, C09D 157/06, C08F 20/10, C08F 28/02

(54) **POLYMERS FOR ANTIFOULING COATINGS AND A PROCESS FOR THE PREPARATION THEREOF**
POLYMERE FÜR ANWUCHSVERHINDERNDE ÜBERZÜGE UND VERFAHREN ZU IHRER HERSTELLUNG
POLYMERES POUR DES PEINTURES MARITIMES ET UN PROCEDE POUR LEUR PREPARATION

(30) Priority: 13.06.1995 NO 952329
(43) Date of publication of application: 08.04.1998
(73) Proprietor: Jotun A/S, 3235 Sandefjord (NO)
(72) Inventor: UNDRUM, Thoralv, N-3157 Bark ker (NO); NILSEN, Marianne, Terland, N-3213 Sandefjord (NO); DAHLING, Marit, N-3224 Sandefjord (NO)
(74) Representative: Hucker, Charlotte Jane
(86) International application number: NO9600144
(87) International publication number: WO9641842

(56) References cited:
- EP-A- 0 177 846
- EP-A- 0 327 021
- EP-A- 0 608 132
- WO-A-84/02915
- WO-A-92/16570
- WO-A-93/02146

## Description

The present invention relates to tin-free, hydrolysable polymers for use in antifouling coatings and a process for the preparation of tin-free, slowly hydrolysable, polymerisable compounds which can be used for the preparation of binder systems for antifouling coatings to protect underwater surfaces against the growth of marine organisms.

Under suitable conditions, surfaces which are permanently exposed to sea water such as ships, buoys, drilling platforms, underwater pipelines, fishing nets etc. very quickly become overgrown with marine organisms such as algae, sea grass, mussels, tube worms, sponges etc. This growth proves extremely troublesome in a lot of cases; it restricts, and is prejudicial to the characteristics pertaining to the use of many types of equipment. For example, the growth on underwater surfaces of ships results in a limitation of their manoeuvrability and a substantial additional consumption of fuel because of the increased frictional resistance in the water.

For these reasons coatings known as antifouling paints which prevent such growth, are widely used to protect underwater surfaces against the settlement of these organisms. These paints generally consist of a biocidal or non-biocidal polymer and film-forming binder, together with co-biocides and pigments.

Antifouling paints which have frequently been used in recent years not only prevent growth but also possess self-polishing film properties ("self-polishing" copolymers). In these systems, the self-polishing effect is obtained by the controlled hydrolysis of functional groups which cause the paint surface to become hydrophilic and hence erodible. Such paints are for example described in EP-A-0 289 481. Antifouling paints whose copolymers contain triorgano tin esters, in particular tri-n-butyl and triphenyl tin esters, are particularly widely used. Examples are described in GB-A-1 457 590. Because of the slow and controlled hydrolysis of the triorgano tin ester group, these systems have self-polishing properties and also excellent antifouling characteristics because of the biocidal effect of the tributyl/triphenyl-tin compound. This particularly favourable combination of properties has resulted in the widespread use of tin-based antifouling paints.

In recent years the use of paints which contain tributyl/triphenyl-tin has been the subject of controversy as the strong biocidal effect of these systems does not appear to be necessary in all areas. In some countries, the use of antifouling paints which contain tributyl/triphenyl-tin on yachts and ships with a length of less than 25 m has been limited or even prohibited.

There is therefore a need for effective, tin-free, slow and controlled hydrolysable antifouling paint systems.

Various examples of antifouling paints characterized by groups which are hydrolysable in sea water are described in the relevant literature. For example, WO 84/02915 lists a large number of possible groups which are reported to form readily hydrolysable compounds with groups which contain carboxylic acid. EP-A-0 204 444, EP-A-0 331 147 and GB 2 152 947 also describe polymer systems containing esters for antifouling applications. However, all these systems have either not been used commercially or else require a multi-stage and relatively complex process of synthesis for their preparation.

We have discovered that, unlike polymers which are structured solely on the basis of acrylic acid or methacrylic acid alkyl esters (e.g. methyl methacrylate, butyl methacrylate), homopolymers and copolymers which are made of certain functionalized acrylic acid or methacrylic acid esters can be hydrolysed in an alkaline environment (sea water pH: 8.1-8.3). This hydrolysis is a prerequisite firstly for the self-polishing properties and secondly for a growth-impeding effect of the paint as a result of the slow and continuous release of the hydrolysed compounds.

The present invention accordingly relates to a polymer for use in antifouling coatings and it is characterized in that it comprises units corresponding to the following monomers.
A) 5 to 100 mol-% of one or more compounds of the general formula I 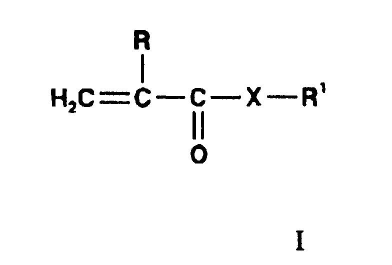 in which:
   - R =: H or CH₃
   - X =: O or S
   - R¹ =: Ph(R²)ₘ, -C(H)_{3-(p+q)}(CO-R³)ₚ(COOR³)_{q}, or optionally substituted thiadiazolyl and thiazolylsulfamylgroups
   - Ph =: phenyl
   - m =: 1-3
   - p =: 0-3
   - q =: 1-3
   - p+q =: 1-3
   - R² =: each independently selected from, -C(O)H, -COOR³, -CH₂-COOR³, -NH-COOR³ and -NH-CO-R³
   - R³ =: H or optionally halogen substituted alkyl, aryl, cycloalkyl and aralkyl groups with 1-10 C atoms
   and
B) 0 to 95 mol-% of one or more other ethylenically unsaturated compound.
   Another object of the invention is a process for preparation of binders for use in antifouling coatings by homopolymerisation or copolymerisation of polymerisable monomers, characterized in that the polymerisable monomers which are polymerised consist of mixtures of one or more component A) and one or more component B).
   Another object of the invention is a variation of the process for the preparation of binders for antifouling coatings, characterized in that in step I as polymerisable monomers mixtures of
C) 5 to 100 mol-% of one or more compounds of the general formula II 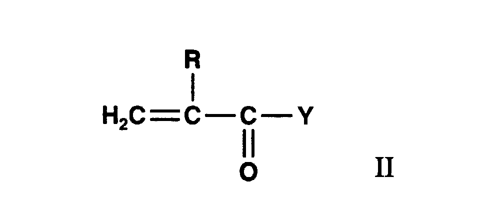 and
D) 0 to 95 mol-% of one or more other ethylenically unsaturated compound

are polymerised in the presence of radical-forming initiators and inert solvents by techniques known to one skilled in the art
and in step II in a polymer-analogous reaction
the obtained copolymers are reacted with one or more compounds of the general formula III

R¹-Z III

in which
- R =: H or CH₃
- Y =: Cl or XH
- Z =: groups which are reactive with Y, as XH or Cl
- X =: O or S
- R¹ =: Ph(R²)ₘ, -C(H)_{3-(p+q)}(CO-R³)ₚ(COOR³)_{q} or optionally substituted thiadiazolyl and thiazolylsulfamylgroups
- Ph =: phenyl
- m =: 1-3
- p =: 0-3
- q =: 1-3
- p+q =: 1-3
- R² =: each independently selected from, -C(O)H, -COOR³, -CH₂-COOR³, -NH-COOR³ and -NH-CO-R³
- R³ =: H or optionally halogen substituted alkyl, aryl, cycloalkyl, aralkyl groups with 1-10 C atoms.

The reactive group Z should be selected in that way, that it reacts preferably with Y and side reactions with other groups can be neglected.

The optionally substituted thiadiazolyl groups as R¹ in the general formulas I and III, can be 1,2,4-thiadiazolyl unsubstituted or substituted with halogen, alkyl with 1 - 4 C atoms or phenyl.

The optionally substituted thiazolylsulfamyl groups as R¹ in the general formulas I and III, can be unsubstituted or substituted with halogen, alkyl with 1 - 4 C atoms or phenyl.

Other objects of the invention are characterized by the claims.

Examples of the substances which may be used as component A) for the preparation of binders for antifouling coatings include
ester-substituted phenyl esters of acrylic or methacrylic acid such as 4-methacryloyloxy methyl benzoate, 4-methacryloyloxy propyl benzoate, 2-methacryloyloxy methyl benzoate;
carboxy-substituted phenyl esters of acrylic acid or methacrylic acid such as 2-methacryloyloxy benzoic acid, 4-methacryloyloxy benzoic acid ;
formyl-substituted phenyl esters of acrylic acid or methacrylic acid such as 2-formyl phenyl methacrylate;
amide substituted phenyl esters of acrylic acid or methacrylic acid such as 4-methacryloyloxy acetanilide;
carbonyl and ester substituted aliphatic esters of acrylic acid or methacrylic acid such as 2-methacryloyloxy acetoacetic acid ethyl ester, methacryloyloxy malonic acid diethyl ester;
aromatic and aliphatic thioesters of acrylic acid or methacrylic acid such as ethyloxy thioglycolic acid methacrylate, methyloxy thioglycolic acid methacrylate, methacrylic acid-S-thioglycolic acid ester;
methacryloyloxy acetic acid derivatives such as methacryloyloxy acetic acid, methoxycarbonyl methyl methacrylate, t-butoxy carbonyl methyl methacrylate;
1,2,4-thiadiazolyl-S-esters of acrylic acid or methacrylic acid, derivatives which may be disubstituted at the 3,5-position such as e.g. 3-chloro-5-methacryloylthio-1,2,4-thiadiazole, 3-phenyl-5-methacryloylthio-1,2,4-thiadiazole.

Preferred examples are 4-methacryloyloxy methyl benzoate, 2-methacryloyloxy methyl benzoate, 4-methacryloyloxy benzoic acid, 2-formyl phenyl methacrylate, 2-methacryloyloxy acetoacetic acid ethyl ester, methacryloyloxy malonic acid diethyl ester, ethyloxy thioglycolic acid methacrylate, methacryloyloxy acetic acid, methoxy carbonyl methyl methacrylate, t-butoxy carbonyl methyl methacrylate, 3-phenyl-5-methacryloylthio-1,2,4-thiadiazole.

The ethylenically unsaturated compounds B) or D) which may also be used in conformity with the invention, are monomers such as:
1) Compounds containing carboxylic groups, e.g. acrylic acid, methacrylic acid, maleic acid and itaconic acid.
2) C1-C18 esters of acrylic acid or methacrylic acid, such as e.g. methyl acrylate, ethyl acrylate, propyl acrylate, n-butyl acrylate, n-hexyl acrylate, methyl methacrylate, ethyl methacrylate, propyl methacrylate, i-propyl methacrylate, n-butyl methacrylate, n-hexyl methacrylate or n-dodecyl methacrylate; C2-C18 alkoxy esters of acrylic acid or methacrylic acid such as methoxy ethyl acrylate, methoxy ethyl methacrylate, methoxy butyl acrylate, methoxy butyl methacrylate, ethoxy butyl acrylate or ethoxy butyl methacrylate; C2-C8 hydroxy alkyl acrylates or hydroxy alkyl methacrylates such as hydroxy ethyl acrylate, hydroxy ethyl methacrylate, hydroxy propyl acrylate or hydroxy propyl methacrylate.
3) Vinyl compounds such as styrene, α-methyl styrene, vinyl toluene, p-chlorostyrene, vinyl acetate, 4-vinyl pyridine or vinyl pyrrolidone.
4) Amides of acrylic acid or methacrylic acid such as methacrylic amide, dimethyl aminopropyl methacrylic amide, N,N-dimethyl acrylic amide.

Examples of the substances which may be used as component C) for the preparation of binders for antifouling coatings include acrylic acid, methacrylic acid, acryloyl chloride, methacryloyl chloride or methyl methacrylate.

Examples for components with the general formula III include aliphatic or aromatic alcohols or thiols.

The preparation of antifouling binder systems can be effected by radical or ionic copolymerisation of the monomers A) of formula I, usually together with ethylenically unsaturated compounds B). Compounds containing conventional peroxide or azo groups may be used as the radical starter (initiator) e.g. dibenzoyl peroxide, bis-(α-α-dimethyl benzyl) peroxide, tert-butyl hydroperoxide, potassium peroxo-disulphate, 2,2'-azobis isobutyronitrile and 2,2'-azobis-(2-methyl butyronitrile) normally in concentrations of 0.01 to 5% by weight of the monomer mixture which is used. The copolymerisation is preferably carried out in suitable solvents by means of solution or precipitation polymerisation. The following are examples of which substances may be used for this purpose: aromatic or aliphatic hydrocarbons such as toluene, xylene, hexane, heptane, petroleum ether; esters such as ethyl acetate, butyl acetate; ketones such as acetone, methyl ethyl ketone, methyl isobutyl ketone; ethers such as ethylene glycol dimethyl ether, diethylene glycol dimethyl ether (diglyme), dibutyl ether, dioxane, tetrahydrofurane or solvents such as dimethyl formamide, dimethyl sulphoxide, water or butanol, possibly as a mixture. Depending on the desired viscosity, the monomer concentration can be in the range between 5 and 80% by weight with reference to the total solution. The copolymerisation itself is carried out by means of known techniques such as heating of the monomers with the initiators in the solvent or by dropping the monomers and initiators into the heated solvent. Depending on the composition of the monomer mixture and the chosen copolymerisation conditions, copolymers with varying composition and with average molecular weights in the 5000 to 200,000 range can be obtained.

Another possibility for the preparation of polymers for antifouling binder systems consists in the already mentioned polymer-analogous reaction, in which the polymeric functionalities are synthesised in a reaction between a copolymer and appropriate reagents.

The antifouling binders which are prepared in this way can be mixed with auxiliary substances and additives such as pigments, biocides and stabilizers as described in US 5 332 430. Examples of pigments include titanium dioxide, activated carbon, iron oxide and blue pigments. Examples of biocidal agents include cuprous oxide, cuprous thiocyanate, zinc oxide, zinc pyrithion, zinc-bis(dimethyl-dithio carbamate) together with compounds which contain e.g. benzothiazols, dithiocarbamates, triazine, thiodiazine, thiadiazole, isothiazoline and quaternary ammonium salts. Examples of other additives include fillers such as silicon dioxide, kaolin, talcum and auxiliary substances such as bentonite, aerosil and similar compounds.

The present invention is described in more detail in the following examples.

### Examples

### Example 1

### General synthesis instructions for the preparation of monomers

1 mol of the starting compound with alcoholic or phenolic OH-groups is dissolved in a three-necked flask in 250 ml of chloroform. An equimolar quantity of triethyl amine and possibly also 20 mol % 4-(dimethyl-amino) pyridine are added and the solution is then cooled to 0°C. An equimolar quantity of (meth)acryloyl chloride is then dropped during one hour into 50 ml of chloroform. While stirring, the temperature should be held at 0°C. On completion of this addition, stirring continues for 1 h at 0°C. The product is either allowed to reach room temperature and stirred for another 8 hours or else heated for 3 hours at reflux. Any salt which has been precipitated out is then filtered off. The chloroform solution is extracted with water, 1 n hydrochloric acid, saturated sodium carbonate solution and again with water after which it is dried on sodium sulphate. The raw product which is obtained after extraction of the chloroform can be cleaned by distillation or recrystallization.

### Example 2

### General synthesis instructions for the preparation of monomers

1 mol of the starting compound with aliphatic or aromatic thiol groups is dissolved in a three-necked flask in 250 ml of anhydrous chloroform. An equimolar quantity of pyridine is added together with a small amount of hydroquinone after which the solution is cooled to 0°C. An equimolar quantity of (meth)acryloyl chloride in 50 ml of chloroform is then dropped into the solution during 1 hour. While stirring, the temperature should be held at 0°C. On completion of this addition, heating to reflux temperature and stirring for 5 hours at this temperature is performed. Any precipitated salt is filtered off and the chloroform solution extracted with water, 10% sulphuric acid, saturated sodium carbonate solution and again with water. After drying on sodium sulphate and removal of the chloroform, raw products are obtained which can be cleaned by distillation or recrystallization.

### Example 3

### General synthesis instructions for the preparation of monomers

1 mol (meth)acrylic acid and 1.5 mol triethyl amine are added together in a three-necked flask and stirred for 1 hour at room temperature. 2 mols of the starting compound (chloro acetic acid derivatives) are then added from a dropping funnel while stirring. Stirring continues for a further 12 hours at room temperature. The precipitated salt is filtered off and washed with ethyl acetate. The filtrate is extracted twice with a saturated sodium hydrogen carbonate solution and once with water before being dried on sodium sulphate. The raw product can be cleaned by distillation or recrystallization.

### Example 4

### General synthesis instructions for the preparation of monomers

0.25 mol of the starting thiadiazole compound is dissolved in 1 I abs. acetone under a stream of nitrogen in a three-necked flask. 0.25 mol N,N'-dicyclohexyl-carbodiimideis added in 100 ml abs. acetone. 0.25 mol (meth)acrylic acid in 100 ml abs. acetone is dropped into the solution while stirring. After further stirring for two days at room temperature, the N,N'-dicyclohexyl urea which is obtained is filtered off and the solvent removed. The raw products which are formed can be recrystallized for cleaning purposes.

### Example 5

### General synthesis instructions for the preparation of monomers

0.5 mol of the starting compound with alcoholic or phenolic OH-groups is dissolved in a three-necked flask in 500 ml of 5% aqueous NaOH. The solution is cooled to 0°C and 0.6 mol methacryloyl chloride is added dropwise. The solution is stirred at 0°C for 2 h. The precipitated product is filtered off and can be cleaned by recrystallization.

### Example 6

### Synthesis of methacryloyloxy acetic acid

20 g t-Butoxycarbonylmethyl methacrylate (synthesis according to Example 3), 200 ml acetonitrile and 0.1 g p-toluenesulfonic acid are combined and heated at reflux for 32 hours. The solvent is stripped off. The resulting oil is crystallized by adding petroleum ether. The product is collected by filtration, washed and dried in a vacuum oven.

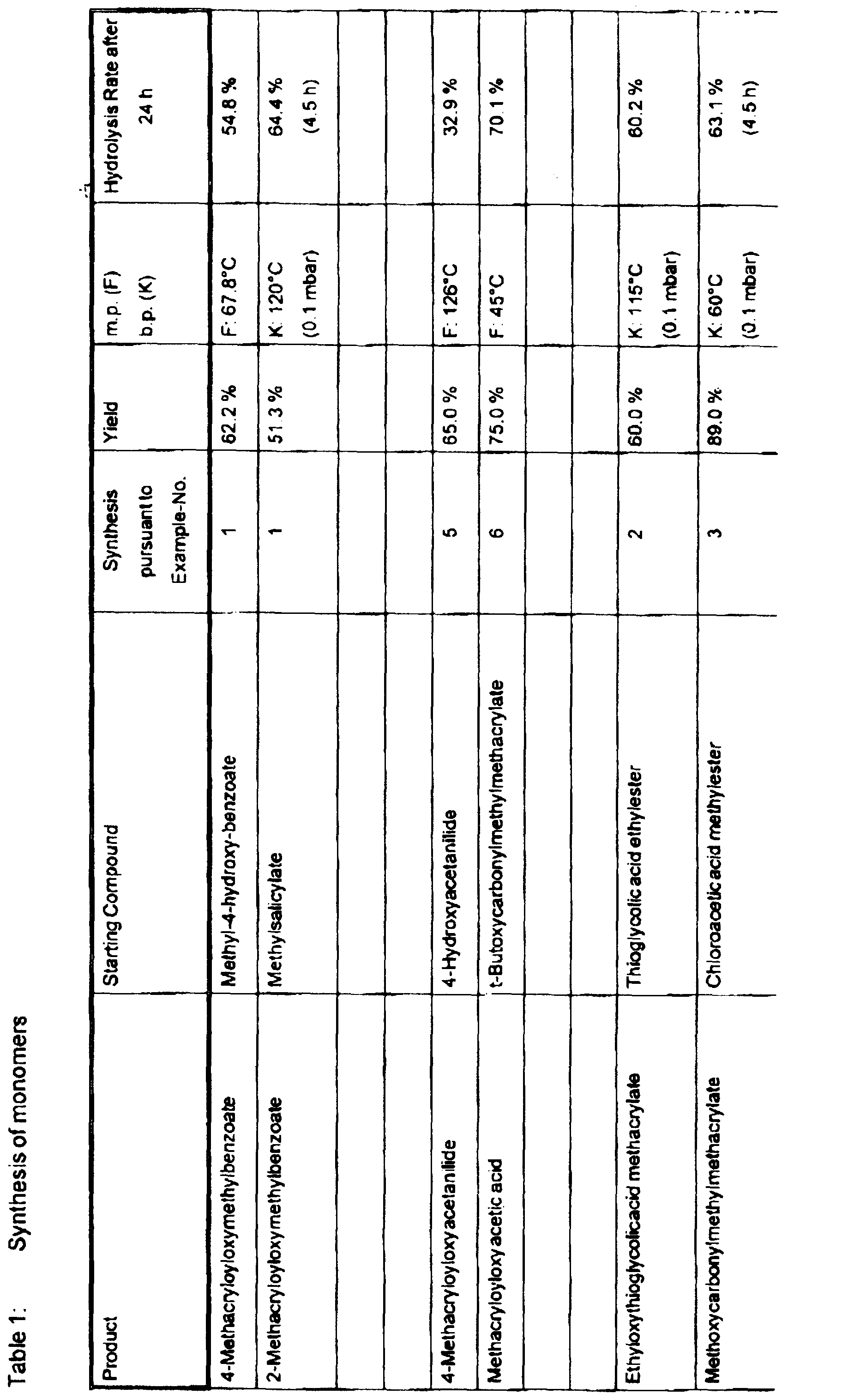

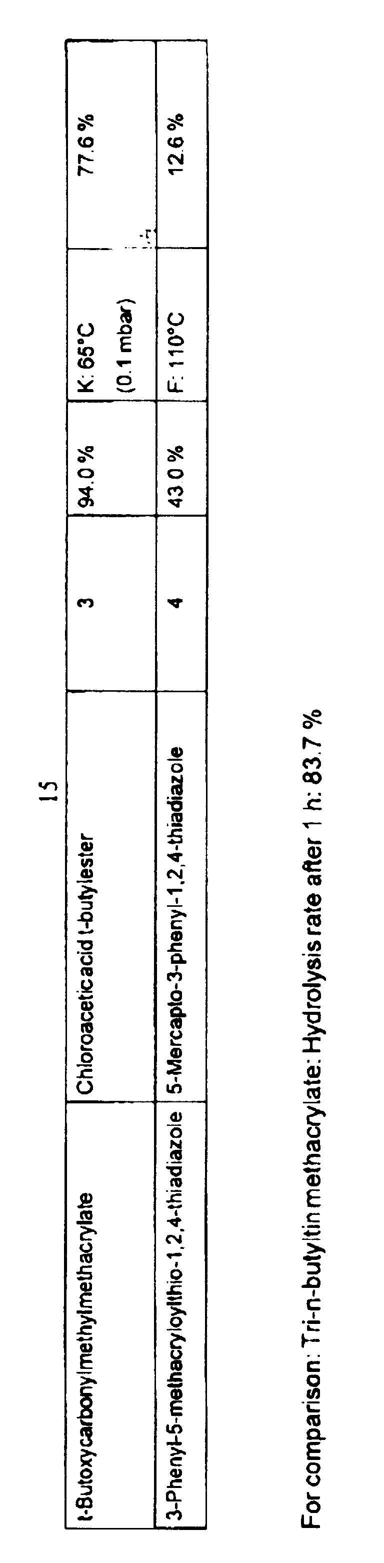

### Example 7

### General instructions for copolymerisation of the monomers

The amount of component A and of components B corresponding to the desired copolymer composition are transferred to a three-necked flask together with the solvent and the initiator. To remove oxygen, the solution is stirred for 30 minutes in a constant stream of nitrogen. The mixture is then heated to 80°C and copolymerised for 4 hours under these conditions. The solids content of the solution is determined. The copolymer can be recovered in the pure state by precipitation in methanol or petroleum ether and isolation in a known manner (filtration).

### Example 8

### Polymer-analogous reaction:

### Synthesis of a copolymer: Methyl methacrylate/ Methoxycarbonylmethylmethacrylate

0.4 mol methyl methacrylate and 0.2 mol methacrylic acid are copolymerised in methanol according to example 7. The copolymer is precipitated in petroleum ether and dried. 20 g of the copolymer are dissolved in 180g dimethyl formamide in a three-necked flask, 9.6 g triethyl amine are added and the solution is stirred for 1 hour at room temperature. 13.7 g of chloroacetic acid methyl ester are added during 1 hour from a dropping funnel while stirring, which is continued for a further 12 hours at room temperature. The precipitated salt is filtered off. The product (copolymer) can be precipitated in water.

### Example 9

### General instructions for the preparation of antifouling paints

75 g of the copolymer (e.g. P1-P24, VP1, VP2) as a 40-50% solution, 5 g of cuprous oxide, 13 g of zinc oxide, 11.1 g of Bentone 38 (gelling agent based on montmorillonite earth, made by Titangesellschaft, 6% solution in xylene) and 10 g of xylene are ground intensively for one hour.

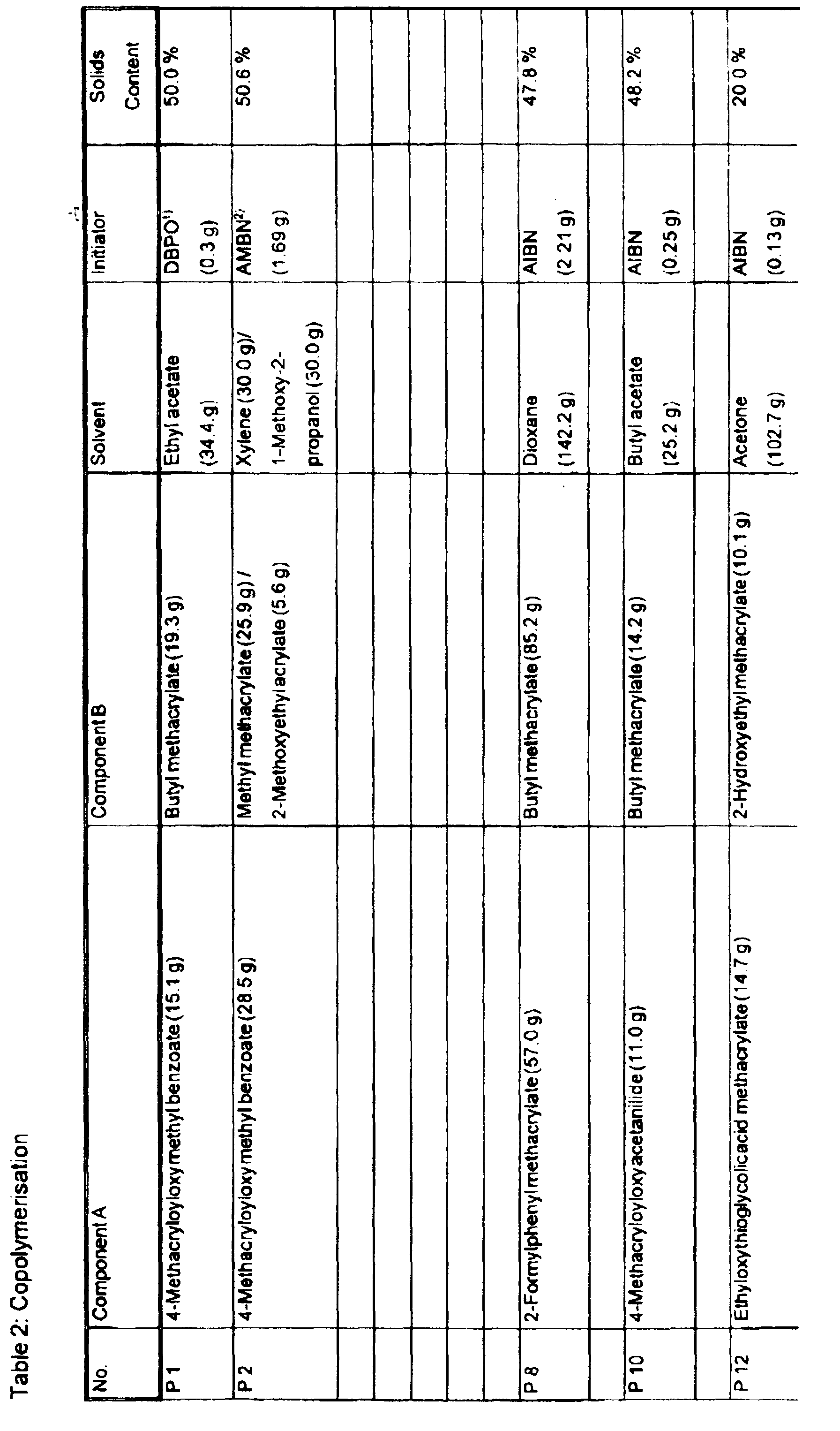

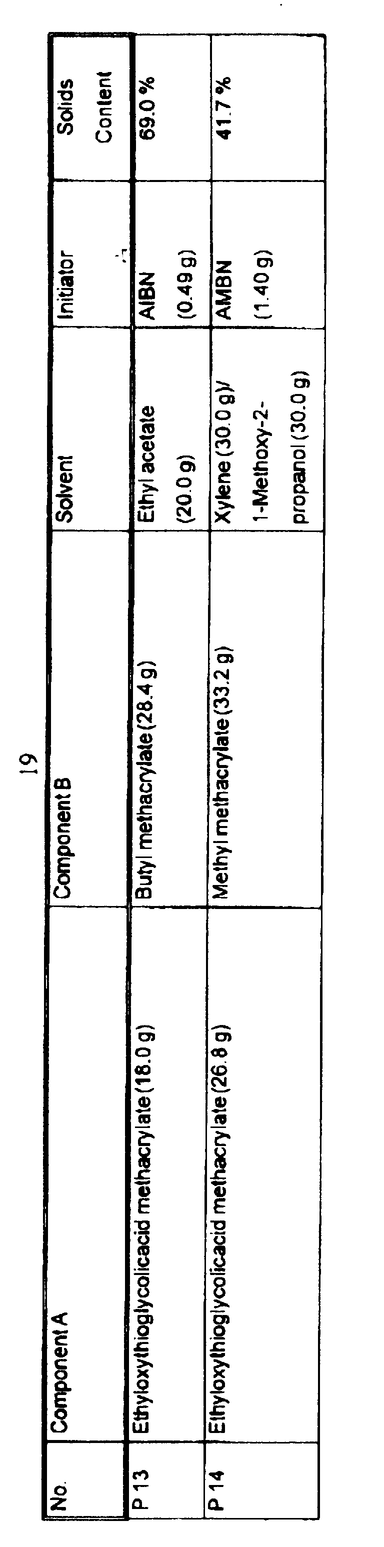

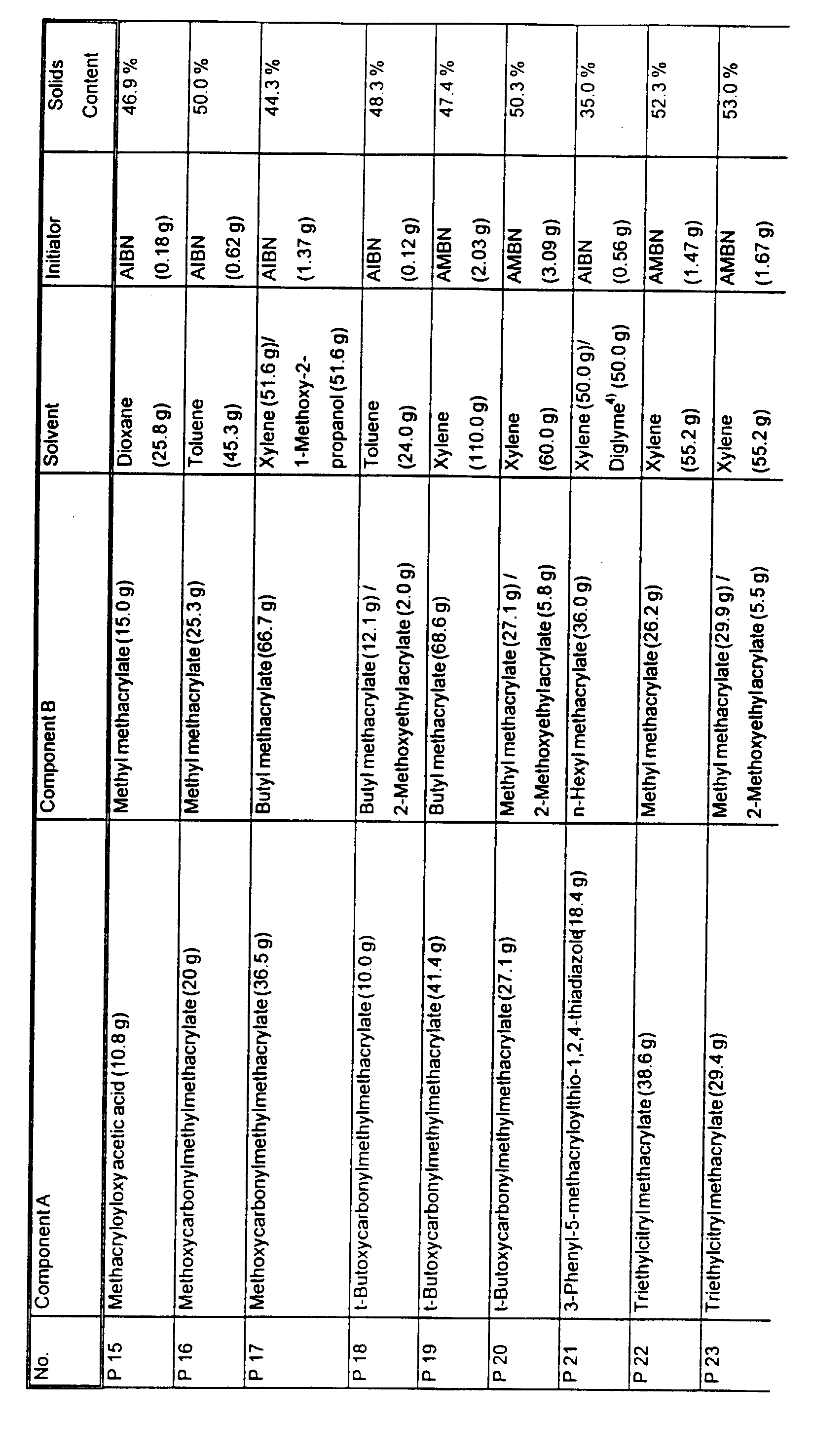

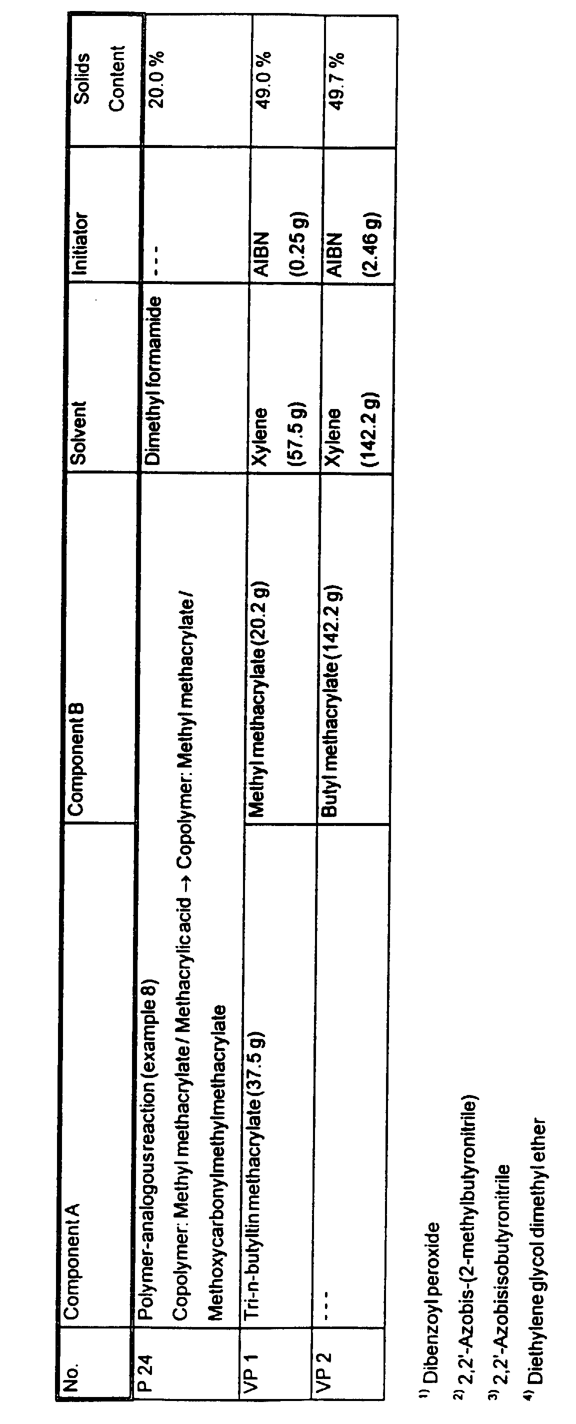

### Determination of the hydrolysis rate in alkaline environment (pH 12)

To determine the hydrolysis rates of the binder systems in an alkaline environment, the conductivity or pH value changes are measured as a function of time. A direct measurement in sea water (pH: 8.1 to 8.3) is impossible for technical measurement reasons (high inherent conductivity because of the salt content).

The measurements were performed as follows:
300 ml of bidistilled and degassed water are set to a pH value of 12 in a three-necked flask, equipped with a stirrer, pH electrode (WTW, Type E50-1.5) and a conductivity electrode (WTW, Type LTA 1, cell constant 0.996 - by adding NaOH pellets. The entire system is thermostatically set to 25 ± 0.1°C (Haake Thermostat GH-D8). The measuring instruments which are used consist of a pH meter (WTW, Type pH 192) and a conductivity measuring instrument (WTW, Type LF 530).

The monomer compounds shown in table 1 are introduced into an aqueous solution; in the case of the binder system in solution as shown in table 2, the substance is applied to glass beads with a diameter of 3 mm to achieve convenient layer thicknesses for practical use, and the solvent is then removed by means of a vacuum pump. The quantity of the polymer binder system which is weighed in is chosen in such a way that after theoretically complete hydrolysis a pH-value of 7 should be measured in the solution.

To determine the hydrolysis rates, the coated glass beads are introduced into the above solution. The pH value and conductivity changes are determined directly, as a function of time, in the solution which is stirred under a stream of nitrogen to ensure better mixing. The measuring period totals 24 hours.

The calculation of the hydrolysis rate is based on the change in the pH-value, which decreases due to hydrolysis of the polymeric binder system resulting in the formation of carboxylic groups as substituents on the polymer backbone. Measuring the pH-value after 24 h (starting pH: 12.00) and calculation of the functional groups based on the weighed copolymers enable a determination of the hydrolysis rate (%, based on the number of functional groups).

The following table 3 clearly shows that the polymer binder systems according to the invention undergo hydrolysis in an alkaline environment under the chosen conditions.

**Table 3:**

| Hydrolysis of polymer binder systems | |
|---|---|
| Binder System | Hydrolysis rate (24 h) |
| P1 | 33.1% |
| P2 | 38.2% |
| | |
| | |
| | |
| | |
| | |
| P8 | 38.5 % |
| | |
| P10 | 21.9 % |
| | |
| P12 | 72.9 % |
| P13 | 87.1 % |
| P14 | 80.9 % |
| P15 | 77.2 % |
| P 16 | 31.7 % |
| P17 | 26.0 % |
| P18 | 23.5 % |
| P19 | 20.1 % |
| P 20 | 27.2 % |
| P21 | 23.9 % |
| P22 | 41.2 % |
| P 23 | 50.7 % |
| P 24 | 32.8 % |
| VP 1 (comparison) | 30.9 % |
| VP 2 (comparison) | 3.2 % |

### Sea water exposure of antifouling paints

The antifouling effectiveness of the (meth)acrylate based copolymers according to the invention against marine organisms was determined by exposure tests in the North Sea (Cuxhaven, Germany).

For this purpose, test sheets of polyvinyl chloride (10 x 15 x 1.4 cm) were provide with antifouling paints which were prepared according to example 5.

The PVC sheets were degreased and subsequently coated with the antifouling paint and dried for 48 hours. The dry film thickness was 100 - 150 µm. The PVC sheets are clamped in a plastic frame and immersed in sea water at a depth of 1 meter for 8 months (February to October). Table 4 clearly shows that the test sheets with the paints according to the invention were free from animal and algae fouling during this period. The test sheets without the according to the invention compounds (comparison example VP 2, polybutyl methacrylate) showed considerably fouling by algae, mussels and barnacles.

**Table 4:**

| Results of sea water exposure of test panels in the North Sea | | |
|---|---|---|
| Antifouling Paint Example | 4 months exposure | 8 months exposure |
| P1 | 0 | 0 |
| P2 | 0 | 5 |
| | | |
| | | |
| | | |
| | | |
| | | |
| P8 | 0 | 10 |
| | | |
| P 10 | 0 | 5 |
| | | |
| P12 | 0 | 10 |
| P 13 | 0 | 5 |
| P 14 | 0 | 0 |
| P15 | 0 | 0 |
| P16 | 0 | 5 |
| P17 | 0 | 0 |
| P 18 | 0 | 5 |
| P 19 | 0 | 0 |
| P 20 | 0 | 5 |
| P 21 | 0 | 0 |
| P 22 | 0 | 5 |
| P 23 | 0 | 0 |
| P 24 | 0 | 5 |
| VP 1 | 0 | 0 |
| VP 2 | 50 | 100 |
| 0 : no fouling 100 : complete fouling | | |

## Claims

1. Polymer for antifouling coatings characterized in that it comprises units corresponding to the following monomers
A) 5 to 100 mol-% of one or more compounds of the general formula I 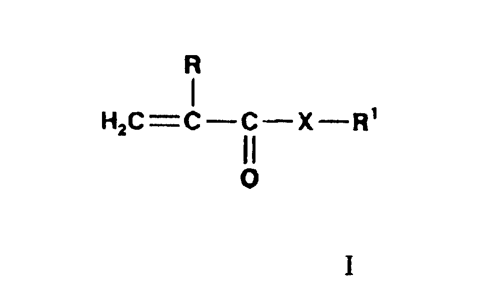 in which
R = H or CH₃
X = O or S
R¹ = Ph(R²)ₘ, -C(H)_{3-(p+q)}(CO-R³)ₚ(COOR³)_{q}, or optionally substituted thiadiazolyl and thiazolylsulfamyl groups
Ph = phenyl
m = 1-3
p = 0-3
q = 1-3
p+q= 1-3
R² = each independently selected from -C(O)H, -COOR³, -CH₂-COOR³, -NH-COOR³ and -NH-CO-R³
R³ = H or optionally halogen substituted alkyl, aryl, cycloalkyl, aralkyl groups with 1-10 C atoms
and
B) 0 to 95 mol-% of one or more other ethylenically unsaturated compound.

2. Polymer in accordance with claim 1, characterized in that it comprises units corresponding to 20 to 70 mol-% of component A) and 30 to 80 mol-% of component B).

3. Polymer in accordance with claim 2, characterized in that it comprises units corresponding to 30 to 50 mol-% of component A) and 50 to 70 mol-% of component B).

4. Polymer in accordance with any of claims 1, 2 and 3 characterized in that it as component A) comprises units corresponding to compounds of the general formula I 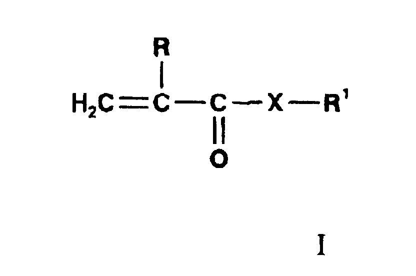 in which
R = CH₃
X = O or S
R¹ = Ph(R²)ₘ, -C(H)_{3-(p+q)}(CO-R³)ₚ(COOR³)_{q}, or optionally substituted thiadiazolyl groups
Ph = phenyl
m = 1-3
p = 0-2
q = 1-2
p+q = 2
R² = each independently selected from -C(O)H, -COOR³
R³ = H or alkyl, aryl groups with 1-10 C atoms.

5. Polymer in accordance with any of claims 1, 2 and 3, characterized in that it comprises units corresponding to monomers selected from
as component A): 4-methacryloyloxy methyl benzoate, 2-methacryloyloxy methyl benzoate, 4-methacryloyloxy benzoic acid, 2-formyl phenyl methacrylate, 2-methacryloyloxy acetoacetic acid ethyl ester, methacryloyloxy malonic acid diethyl ester, ethyloxy thioglycolic acid methacrylate, methacryloyloxy acetic acid, methoxy carbonyl methyl methacrylate, t-butoxy carbonyl methyl methacrylate, 3-phenyl-5-methacryloythio-1,2,4-thiadiazole.
and as component B): butyl acrylate, methyl methacrylate, butyl methacrylate, n-hexyl methacrylate, dodecyl methacrylate, 2-hydroxy ethyl methacrylate, methoxy ethyl acrylate.

6. Process for the preparation of binders for antifouling coatings by homopolymerisation or copolymerisation of polymerisable monomers, characterized in that, as polymerisable monomers, a mixture of
A) 5 to 100 mol-% of one or more compounds of the general formula I 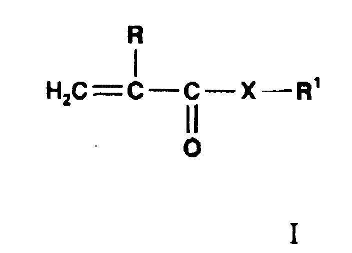 in which
R = H or CH₃
X = O or S
R¹ = Ph(R²)ₘ, -C(H)_{3-(p+q)}(CO-R³)ₚ(COOR³)_{q}, or optionally substituted thiadiazolyl and thiazolylsulfamyl groups
Ph = phenyl
m = 1-3
p = 0-3
q = 1-3
p+q = 1-3
R² = each independently selected from -C(O)H, -COOR³, -CH₂-COOR³, -NH-COOR³ and -NH-CO-R³
R³ = H or optionally halogen substituted alkyl, aryl, cycloalkyl, aralkyl groups with 1-10C atoms
and
B) 0 to 95 mol-% of one or more other ethylenically unsaturated compound
are polymerised in the presence of radical-forming initiators and inert solvents.

7. Process for the preparation of binders for antifouling coatings by homopolymerisation or copolymerisation of polymerisable monomers, characterized in that, as polymerisable monomers a mixture of
A) 5 to 100 mol-% of one or more compounds of the general formula II 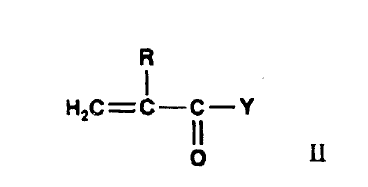 and
B) 0 to 95 mol-% of one or more other ethylenically unsaturated compound
are polymerised in the presence of radical-forming initiators and inert solvents
and then, in a polymer-analogous reaction,
the obtained copolymers are reacted with one or more compounds of the general formula III
R¹-Z III
in which
R = H or CH₃
Y = Cl or XH
Z = groups which are reactive with Y, as XH or Cl
X = O or S
R¹ = Ph(R²)ₘ, -C(H)_{3-(p+q)}(CO-R³)ₚ(COOR³)_{q}, or optionally substituted thiadiazolyl and thiazolylsulfamylgroups
Ph = phenyl
m = 1-3
p = 0-3
q = 1-3
p+q = 1-3
R² = each independently selected from -C(O)H, -COOR³, -CH₂-COOR³, -NH-COOR³ and -NH-CO-R³
R³ = H or optionally halogen substituted alkyl, aryl, cycloalkyl, aralkyl groups with 1-10 C atoms

8. Antifouling paints containing binders in conformity with any of claims 1-5, together, when appropriate, with auxiliary substances and additives such as pigments, anti-settling agents, solvents, biocides and stabilizers.

9. The use of monomers of the general formula I 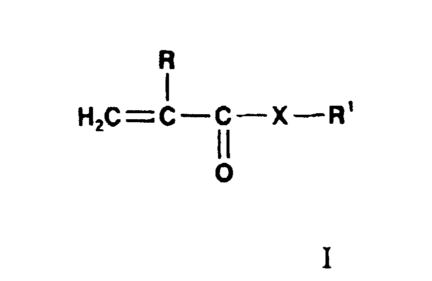 in which
R = H or CH₃
X = O or S
R¹ = Ph(R²)ₘ, -C(H)_{3-(p+q)}(CO-R³)ₚ(COOR³)_{q}, or optionally substituted thiadiazolyl and thiazolylsulfamyl groups
Ph = phenyl
m = 1-3
p = 0-3
q = 1-3
p+q = 1-3
R² = each independently selected from -C(O)H, -COOR³, -CH₂-COOR³, -NH-COOR³ and -NH-CO-R³
R³ = H or optionally halogen substituted alkyl, aryl, cycloalkyl, aralkyl groups with 1-10 C atoms,
for the preparation of polymers for antifouling coatings.

## Patentansprüche

1. Polymer für anwuchsverhindernde Überzüge, dadurch gekennzeichnet, dass es Einheiten umfasst, die den folgenden Monomeren entsprechen
A) 5 bis 100 Mol-% einer oder mehrerer Verbindungen der allgemeinen Formel I 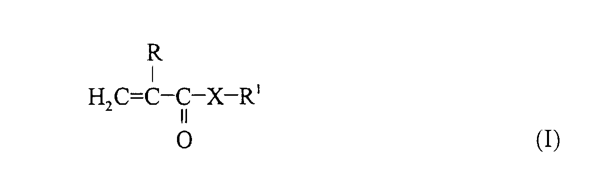 in welcher
R = H oder CH₃
X = O oder S
R¹ = Ph(R²)ₘ, -C(H)_{3-(p+q)}(CO-R³)ₚ(COOR³)_{q}, oder wahlweise substituierte Thiadiazolyl- oder Thiazolylsulfamylreste
Ph = Phenyl
m = 1-3
p = 0-3
q = 1-3
p+q = 1-3
R² = jedes unabhängig ausgewählt aus -C(O)H, -COOR³, -CH₂-COOR³, -NH-COOR³ und -NH-CO-R³
R³ = H oder wahlweise Halogen-substituierte Alkyl-, Aryl-, Cycloalkyl-, Aralkylreste mit 1-10 C-Atomen
und
B) 0 bis 95 Mol-% einer oder mehrerer anderer ungesättigter Ethylen-Verbindungen.

2. Polymer gemäß Anspruch 1, dadurch gekennzeichnet, dass es Einheiten umfasst, die 20 bis 70 Mol-% der Komponente A und 30 bis 80 Mol-% der Komponente B) entsprechen.

3. Polymer gemäß Anspruch 2, dadurch gekennzeichnet, dass es Einheiten umfasst, die 30 bis 50 Mol-% der Komponente A und 50 bis 70 Mol-% der Komponente B) entsprechen.

4. Polymer gemäß einem der Ansprüche 1, 2 und 3, dadurch gekennzeichnet, dass es für Komponente A) Einheiten umfasst, die Verbindungen der allgemeinen Formel I entsprechen: 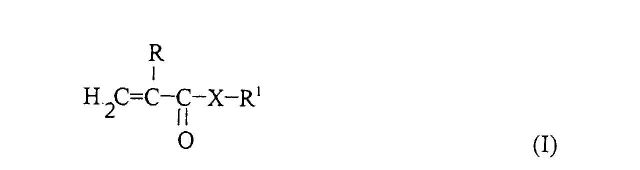 in welcher
R = CH₃
X = O oder S
R¹ = Ph(R²)ₘ, -C(H)_{3-(p+q)}(CO-R³)ₚ(COOR³)_{q}, oder wahlweise substituierte Thiadiazolylreste
Ph = Phenyl
m = 1-3
p = 0-2
q = 1-2
p+q = 2
R² = jedes unabhängig ausgewählt aus -C(O)H, -COOR³
R³ = H oder Alkyl-, Arylreste mit 1-10 C-Atomen.

5. Polymer gemäß einem der Ansprüche 1, 2, und 3, dadurch gekennzeichnet, dass es Einheiten umfasst, die Monomere entsprechen, die ausgewählt sind aus:
als Komponente A): 4-Methacryloyloxy-methylbenzoat, 2-Methacryloyloxy-methylbenzoat, 4-Methacryloyloxy-benzoesäure, 2-Formylphenylmethacrylat, 2-Methacryloyloxy-acetessigsäureethylester, Methacryloyloxy-malonsäurediethylester, Ethyloxythioglycolsäure-methacrylat, Methacryloyloxyessigsäure, Methoxycarbonylmethyl-methacrylat, t-Butoxycarbonylmethyl-methacryl at, 3-Phenyl-5-methacryloylthio- 1,2,4-thiadiazol
und als Komponente B): Butylacrylat, Methylmethacrylat, Butylmethacrylat, n-Hexylmethacrylat, Dodecylmethacrylat, 2-Hydroxyethylmethacrylat, Methoxyethylacrylat.

6. Verfahren zur Herstellung eines Bindemittels für anwuchsverhindernde Überzüge durch Homopolymerisation oder Copolymerisation polymerisierbarer Monomere, dadurch gekennzeichnet, dass als polymerisierbares Monomer ein Gemisch aus
A)5 bis 10 Mol-% eines oder mehrerer Verbindungen der allgemeinen Formel I 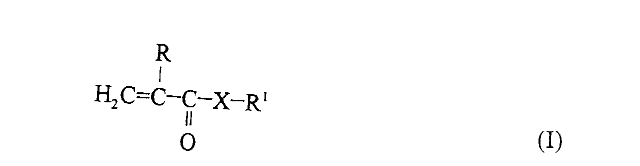 in welcher
R = H oder CH₃
X = O oder S
R¹ = Ph(R²)ₘ, -C(H)_{3-(p+q)}(CO-R³)ₚ(COOR³)_{q}, oder wahlweise substituierte Thiadiazolyl- oder Thiazolylsulfamylreste
Ph = Phenyl
m = 1-3
p = 0-3
q = 1-3
p+q = 1-3
R² = jedes unabhängig ausgewählt aus -C(O)H, -COOR³, -CH₂-COOR³, -NH-COOR³ und -NH-CO-R³
R³ = H oder wahlweise Halogen-substituierte Alkyl-, Aryl-, Cycloalkyl-, Aralkylreste mit 1-10 C-Atomen
und B) 0 bis 95 Mol-% eines oder mehrerer anderer ungesättigter Ethylen-Verbindungen
in Gegenwart eines Radikal-bildenden Initiators und eines inerten Lösungsmittels polymerisiert werden.

7. Verfahren zur Herstellung von Bindemitteln für anwuchsverhindernde Überzüge durch Homopolymerisation oder Copolymerisation von polymerisierbaren Monomeren, dadurch gekennzeichnet, dass als polymerisierbare Monomere ein Gemisch aus
A) 5 bis 100 Mol-% einer oder mehrerer Verbindungen der allgemeinen Formel II 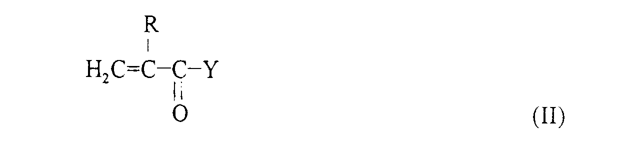 und
B) 0 bis 95 Mol-% eines oder mehrerer anderer ungesättigter Ethylen-Verbindungen
in Gegenwart Radikal-bildender Initiatoren und inerten Lösungsmitteln polymerisiert werden
und dann in einer polymer-analogen Reaktion,
die erhaltenen Copolymere mit einer oder mehreren Verbindungen der allgemeinen Formel III umgesetzt werden
R¹-Z (III)
in welcher
R = H oder CH₃
Y = Cl oder XH
Z = Reste, welche mit Y, wie XH oder Cl, reaktiv sind
X = O oder S
R¹ = Ph(R²)ₘ, -C(H)_{3-(p+q)}(CO-R³)ₚ(COOR³)_{q}, oder wahlweise substituierte Thiadiazolyl- oder Thiazolylsulfamylreste
Ph = Phenyl
m = 1-3
p = 0-3
q = 1-3
p+q = 1-3
R² = jeweils unabhängig ausgewählt aus -C(O)H, -COOR³, -CH₂-COOR³, -NH-COOR³ und -NH-CO-R³
R³ = H oder wahlweise Halogen-substituierte Alkyl-, Aryl-, Cycloalkyl-, Aralkylreste mit 1-10 C-Atomen.

8. Anwuchsverhindernde Anstriche , welche Bindemittel enthalten, die gemäß einem der Ansprüche 1 - 5 sind, zusammen mit geeigneten Hilfsverbindungen und Zusätzen, wie Pigmenten, Antiabsetzmittel, Lösungsmittel, Pestizide und Stabilisatoren.

9. Verwendung von Monomeren der allgemeinen Formel I 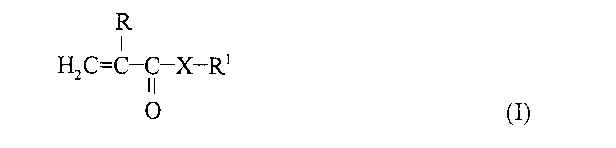 in welcher
R = H oder CH₃
X = O oder S
R¹ = Ph(R²)ₘ, -C(H)_{3-(p+q)}(CO-R³)ₚ(COOR³)_{q}, oder wahlweise substituierte Thiadiazolyl- oder Thiazolylsulfamylreste
Ph = Phenyl
m = 1-3
p = 0-3
q = 1-3
p+q = 1-3
R² = jedes unabhängig ausgewählt aus -C(O)H, -COOR³, -CH₂-COOR³, -NH-COOR³ und -NH-CO-R³
R³ = H oder wahlweise Halogen-substituierte Alkyl-, Aryl-, Cycloalkyl-, Aralkylreste mit 1-10 C-Atomen
für die Herstellung von Polymeren für anwuchsverhindernde Überzüge.

## Revendications

1. Polymère pour revêtements antifouling, caractérisé en ce qu'il comprend des unités correspondant aux monomères suivants :
A) de 5 à 100 % molaires d'un ou plusieurs composés de formule générale I : 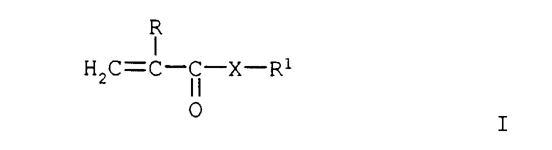 dans laquelle :
R = H ou CH₃
X = O ou S
R¹ = Ph(R²)ₘ, -C(H)_{3-(p+q)}(CO-R³)ₚ(COOR³)_{q} ou des groupes thiadiazolyle ou thiazolylsulfamyle le cas échéant substitués
Ph = phényle
m = 1 à 3
p = 0 à 3
q = 1 à 3
p+q = 1 à 3
R² = choisi chacun indépendamment parmi -C(O)H, -COOR³, -CH₂-COOR³, -NH-COOR³ et -NH-CO-R³
R³ = H ou groupes alkyle, aryle, cycloalkyle, aralkyle le cas échéant halogéno-substitués ayant 1 à 10 atomes de carbone
et
B) de 0 à 95 % molaires d'un ou plusieurs autres composés éthyléniquement insaturés.

2. Polymère selon la revendication 1, caractérisé en ce qu'il comprend des unités correspondant à 20 à 70 % molaires de composant A) et à 30 à 80 % molaires de composant B).

3. Polymère selon la revendication 2, caractérisé en ce qu'il comprend des unités correspondant à 30 à 50 % molaires de composant A) et à 50 à 70 % molaires de composant B).

4. Polymère selon l'une quelconque des revendications 1, 2 et 3, caractérisé en ce qu'il comprend comme composant A) des unités correspondant à des composés de formule générale I : 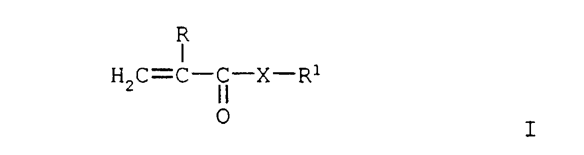 dans laquelle :
R = CH₃
X = O ou S
R¹ = Ph (R²)ₘ, -C (H)_{3-(p+q)}(CO-R³)ₚ(COOR³)_{q} ou des groupes thiadiazolyle le cas échéant substitués
Ph = phényle
m = 1 à 3
p = 0 à 2
q = 1 à 2
p+q = 2
R² = choisi chacun indépendamment parmi -C(O)H, -COOR³
R³ = H ou groupes alkyle, aryle avec 1 à 10 atomes de carbone.

5. Polymère selon l'une quelconque des revendications 1, 2 et 3, caractérisé en ce qu'il comprend des unités correspondant à des monomères choisis
pour le composant A), dans le groupe comprenant le benzoate de 4-méthacryloyloxyméthyle, le benzoate de 2-méthacryloyloxyméthyle, l'acide 4-méthacryloyloxybenzoïque, le méthacrylate de 2-formylphényle, le 2-méthacryloyloxyacétoacétate d'éthyle, le méthacryloyloxymalonate de diéthyle, le méthacrylate d'acide éthyloxythioglycolique, l'acide méthacryloyloxyacétique, le méthacrylate de méthoxycarbonylméthyle, le méthacrylate de t-butoxycarbonylméthyle, le 3-phényl-5-méthacryloylthio-1,2,4-thiadiazole;
et pour le composant B), dans le groupe comprenant l'acrylate de butyle, le méthacrylate de méthyle, le méthacrylate de butyle, le méthacrylate de n-hexyle, le méthacrylate de dodécyle, le méthacrylate de 2-hydroxyéthyle, l'acrylate de méthoxyéthyle.

6. Procédé de préparation de liants pour des revêtements antifouling par homopolymérisation ou copolymérisation de monomères polymérisables, caractérisé en ce que l'on polymérise comme monomères polymérisables un mélange de :
A) de 5 à 100 % molaires d'un ou plusieurs composés de formule générale I : 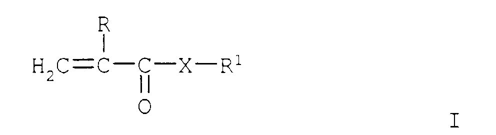 dans laquelle :
R = H ou CH₃
X = O ou S
R¹ = Ph(R²)ₘ, -C(H)_{3-(p+q)}(CO-R³)ₚ(COOR³)_{q} ou des groupes thiadiazolyle ou thiazolylsulfamyle le cas échéant substitués
Ph = phényle
m = 1 à 3
p = 0 à 3
q = 1 à 3
p+q = 1 à 3
R² = choisi chacun indépendamment parmi -C(O)H, -COOR³, -CH₂-COOR³, -NH-COOR³ et -NH-CO-R³
R³ = H ou groupes alkyle, aryle, cycloalkyle, aralkyle le cas échéant halogéno-substitués ayant 1 à 10 atomes de carbone
et
B) de 0 à 95 % molaires d'un ou plusieurs autres composés éthyléniquement insaturés,
en présence d'excitants formant des radicaux et de solvants inertes.

7. Procédé de préparation de liants pour des revêtements antifouling par homopolymérisation ou copolymérisation de monomères polymérisables, caractérisé en ce que l'on polymérise comme monomères polymérisables un mélange de :
A)de 5 à 100 % molaires d'un ou plusieurs composés de formule générale II 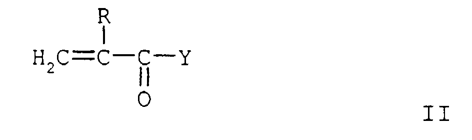 et
B)0 à 95 % molaires d'un ou plusieurs autres composés éthyléniquement insaturés
en présence d'excitants formant des radicaux et de solvants inertes
et ensuite, dans une réaction analogue aux polymères, on fait réagir les copolymères ainsi obtenus avec un ou plusieurs composés de formule générale III :
R¹-Z III
dans laquelle :
R = H ou CH₃
Y = Cl ou XH
Z = groupes réactifs vis-à-vis de Y tels que XH ou Cl
X = O ou S
R¹ = Ph (R²)ₘ, -C (H)_{3-(p+q)}(CO-R³)ₚ(COOR³)_{q} ou des groupes thiadiazolyle ou thiazolylsulfamyle le cas échéant substitués
Ph = phényle
m = 1 à 3
p = 0 à 3
q = 1 à 3
p+q = 1 à 3
R² = choisi chacun indépendamment parmi -C(O)H, -COOR³, -CH₂-COOR³, -NH-COOR³ et -NH-CO-R³
R³ = H ou groupes alkyle, aryle, cycloalkyle, aralkyle le cas échéant halogéno-substitués ayant 1 à 10 atomes de carbone

8. Peintures antifouling contenant des liants selon l'une quelconque des revendications 1 à 5, le cas échéant ensemble avec des substances auxiliaires et des additifs tels que des pigments, des agents anti-sédimentation, des solvants, des biocides et des stabilisants.

9. Utilisation de monomères de formule générale I : 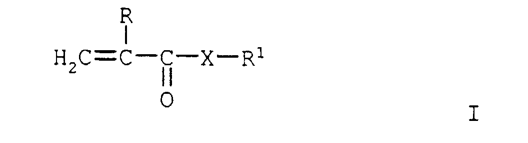 dans laquelle :
R = H ou CH₃
X = O ou S
R¹ = Ph(R²)ₘ, -C(H)_{3-(p+q)}(CO-R³)ₚ(COOR³)_{q} ou des groupes thiadiazolyle ou thiazolylsulfamyle le cas échéant substitués
Ph = phényle
m = 1 à 3
p = 0 à 3
q = 1 à 3
p+q = 1 à 3
R² = choisi chacun indépendamment parmi -C(O)H, -COOR³, -CH₂-COOR³, -NH-COOR³ et -NH-CO-R³
R³ =H ou groupes alkyle, aryle, cycloalkyle, aralkyle le cas échéant halogéno-substitués ayant 1 à 10 atomes de carbone
pour la préparation de polymères pour revêtements antifouling.
